# EUROPÄISCHE PATENTANMELDUNG

(11) **EP 2 365 229 A2**
(43) Veröffentlichungstag der Anmeldung: **14.09.2011**
(21) Anmeldenummer: 11154944.0
(22) Anmeldetag: 18.02.2011
(51) Int. Cl.: F16F 1/30

(54) **Blattfederanbindung**

(30) Priorität: 10.03.2010 DE 102010010987
(71) Anmelder: Benteler Automobiltechnik GmbH, 33102 Paderborn (DE)
(72) Erfinder: Henksmeier, Thomas, 59329, Wadersloh (DE); Hochapfel, Erik, 34281, Godensberg (DE); Bera, Waldemar, D-33178 Borchen (NL)
(74) Vertreter: Griepenstroh, Jörg

(57) **Zusammenfassung**

Blattfederanbindung zur Verbindung einer Blattfeder (2), insbesondere aus einem Faserverbundwerkstoff, mit einer Achse (3) oder einem Rahmen eines Fahrzeuges, mit einer geteilten Blattfederhalterung (4), in welcher die Blattfeder(2) unter Eingliederung von Elastomerkörpern (18, 19) definiert vorgespannt gehalten ist, wobei wenigstens ein Elastomerkörper(18, 19) stoffschlüssig mit der Blattfeder (2) verbunden ist und wobei eine U-förmig konfigurierte Blattfederhalterung (6) die Blattfeder (2) auf einer Oberseite (21) und den sich gegenüberliegenden Längsseiten umgreift, wobei Beine (14) der oberen Blattfederhalterung (5) mit einer gegenüberliegenden unteren Blattfederhalterung (6) über Schraubbolzen (13) verbunden sind, wobei die untere Blattfederhalterung (6) mehrere im Abstand zueinander verlaufende Haltestege (7, 8) aufweist, die stoffschlüssig mit der Achse (3) verbunden sind.

## Beschreibung

Die Erfindung betrifft eine Blattfederanbindung zur Verbindung einer Blattfeder, insbesondere aus einem Faseverbundwerkstoff mit einer Achse oder einem Rahmen eines Fahrzeuges. Blattfedern, ob aus Verbundwerkstoffen, wie GFK oder CFK, oder aus Stahl, werden üblicherweise über eine kraftschlüssige Verbindung an Hinterachsen eines Kraftfahrzeuges derart angebunden, dass die Blattfedern über Spannbügel, sogenannte Brieden, auf eine Halterung, welche für gewöhnlich stoffschlüssig mit dem Achsrohr verbunden ist, gespannt werden.

Darüber hinaus werden Blattfedern aus Verbundwerkstoffen, wie GFK oder CFK, mit sogenannten Blattfederklemmen versehen, um bei ausreichend niedriger Flächenpressung eine Anbindung an die Achse gewährleisten zu können (EP 0 229 471 B1).

Bisherige Lösungen haben den Nachteil, dass an den Blattfedern sehr hohe Flächenpressungen auftreten. Die Flächenpressungen sind deshalb so hoch, da Vorspannverluste der Schraubverbindungen in Folge von Setzungserscheinungen des Systems kompensiert werden müssen. Andererseits darf die Flächenpressung auch nicht zu niedrig sein, um ein Rutschen der Blattfeder sicher zu verhindern.

Es besteht zwar die grundsätzliche Möglichkeit, die Blattfeder zu durchbohren und auf diese Weise die Blattfeder in ihrer relativen Lage zur Blattfederanbindung zu fixieren, allerdings führt dies zu einer unerwünschten Schwächung des Querschnitts der Blattfeder.

Hiervon ausgehend liegt der Erfindung die Aufgabe zugrunde, eine Blattfederanordnung vorzugsweise für Blattfedern aus Verbundwerkstoffen, wie GFK oder CFK, aufzuzeigen, mit welcher ein Rutschen der Blattfeder verhindert wird, bei welcher die zulässigen Flächenpressungen nicht überschritten werden und darüber hinaus Vorspannverluste möglichst reduziert werden. Ferner soll die Blattfederanbindung möglichst wirtschaftlich herzustellen und zudem gegenüber den marktüblichen Lösungen leicht sein.

Diese Aufgabe wird bei einer Blattfederanordnung mit den Merkmalen des Patentspruchs 1 gelöst.

Die Unteransprüche betreffen vorteilhafte Weiterbildungen der Erfindung.

Die erfindungsgemäße Blattfederanordnung umfasst eine geteilte Blattfederhalterung, in welcher die Blattfeder unter Eingliederung von Elastomerkörpern definiert vorgespannt gehalten ist und wobei wenigstens ein Elastomerkörper stoffschlüssig mit der Blattfeder verbunden ist.

Der Elastomerkörper besteht vorzugsweise aus Gummi. Die stoffschlüssige Verbindung zu der Blattfeder ermöglicht es, die sehr hohe Flächenpressung signifikant zu reduzieren, da es auch bei geringerer Flächenpressung nicht zu einer Relativverlagerung der Blattfeder gegenüber dem mit der Blattfeder in Kontakt stehenden Elastomerkörper kommen kann.

Aufgrund der Tatsache, dass die Flächenpressung reduziert werden kann, besteht auch die Möglichkeit, die Blattfederhalterung insgesamt weniger massiv und damit leichter und kostengünstiger zu gestalten.

Ein weiterer Vorteil ist, dass der Querschnitt der Blattfeder nicht verändert werden muss um eine Lagefixierung der Blattfeder gegenüber der Blattfederhalterung zu erreichen. Das elastische Vorspannen der Elastomerkörper dient auch dazu, die im System gegebenenfalls auftretenden Setzverluste weitgehend zu kompensieren, so dass es nicht zu einem Lösen von Verschraubungen kommen kann, mittels welcher die Blattfeder an der Achse oder an dem Rahmen eines Fahrzeuges gehalten ist. Geeignete Materialien für den Elastomerkörper sind Gummi aber auch zellulare Materialen. Durch die Materialwahl der Elastomerkörper können die Reibbeiwerte in den Trennfugen der Blattfederanbindung beeinflusst und in einem gewissen Rahmen eingestellt werden.

Die Blattfederanbindung umfasst eine U-förmig konfigurierte obere Blattfederhalterung, weiche die Blattfeder auf einer Oberseite und den sich gegenüberliegenden Längsseiten umgreift. Dabei werden Seitenschenkel der oberen Blattfederhalterung mit einer gegenüberliegenden unteren Blattfederhalterung über Schraubbolzen verbunden.

Die untere Blattfederhalterung weist mehrere im Abstand zueinander verlaufende Haltestege auf, die wiederum stoffschlüssig mit der Achse verbunden sind.

Die stoffschlüssige Verbindung mit der Achse ist relativ kostengünstig zu realisieren und vermeidet mehrschnittige Anbindungen, was generell günstiger für den Kraftverlauf ist. Mit anderen Worten muss die untere Blattfederhalterung nicht mit einer Achse verschraubt werden, wobei bei herkömmlichen Systemen die Verschraubung auch dafür benutzt wurde, gleichzeitig eine obere Blattfederhalterung gegen die Blattfeder zu pressen. Die Schraubbolzen bzw. Schraubbügel sind dadurch relativ lang, was bei der Erfindung nicht der Fall ist.

Die Fixierung des wenigstens einen Elastomerkörpers erfolgt über einen kalt-oder warmaushärtenden Klebstoff, der auf die Blattfeder und/oder den Elastomerkörper aufgetragen wird.

In einer weiteren Ausführungsform ist es denkbar, dass der Elastomerkörper unmittelbar über das Harz einer Blattfeder aus einem Faserverbundwerkstoff mit der Blattfeder verbunden ist. Beispielsweise kann ein Elastomerkörper in einem Formwerkzeug des RTM-Verfahrens (RTM = Resin Transfer Moulding) unmittelbar bei der formgebenden Herstellung der Blattfeder aus einem Faserverbundwerkstoff über das in die Form injizierte Harz mit der Blattfeder verbunden sein.

Unabhängig von der Art der Verbindungstechnik ist es möglich, den Elastomerkörper selber als Verbundwerkstoff auszugestalten. Insbesondere ist es denkbar wenigstens eine Metalleinlage in den Elastomerkörper zu integrieren. Über eine insbesondere metallische Einlage und die Wahl der Shorehärte des elastomeren Grundwerkstoffes ist es möglich, den daraus resultierenden Vorspannkraftverlauf zu beeinflussen, um die angestrebte Flächenpressung in der gewünschten Art und Weise einzustellen.

Es ist theoretisch denkbar, dass der wenigstens eine Elastomerkörper auch auf seiner der Blattfeder abgewandten Seite mit der Achse oder einem Rahmen des Fahrzeugs bzw. mit der entsprechenden Blattfederhalterung verklebt ist. Allerdings würde dies den Austausch bei einer Reparatur erschweren. In vorteilhafter Weiterbildung ist daher vorgesehen, dass der wenigstens eine Elastomerkörper auf seiner der Blattfeder abgewandten Seite eine Oberflächenstruktur aufweist, die im formschlüssigen Eingriff mit der Blattfederhalterung steht. Auf diese Weise wird auf der einen Seite des Elastomerkörpers eine stoffschlüssige und auf der anderen Seite eine formschlüssige Verbindung geschaffen, durch welche einerseits eine sichere Lagerorientierung der Blattfeder gegenüber der Blattfederhalterung und andererseits eine leichte Montier- und Demontierbarkeit ermöglicht wird.

Um den Formschluss zu verbessern kann die wenigstens eine, insbesondere metallische Einlage in einem Bereich angeordnet sein, welcher im formschlüssigen Eingriff mit der Blattfederhalterung steht. Die metallische Einlage, die insbesondere durch Vulkanisation mit einem aus Gummi bestehenden Elastomerkörper verbunden ist, kann beispielsweise in einer dafür vorgesehenen Nut der Blattfederhalterung platziert werden, so dass der Elastomerkörper nur diese eine Position in Bezug zu der Nut einnehmen kann. Durch eine insbesondere metallische Einlage, wird eine bessere Lagepositionierung des Elastomerkörpers relativ zu der Nut erreicht, als durch den prinzipiell weicheren Werkstoff des Elastomerkörpers.

Die Haltestege, die im Abstand zueinander verlaufen, begrenzen einen dazwischenliegenden Spalt, der für den formschlüssigen Eingriff des Eiastomerkörpers ausgebildet ist. Damit sich der Elastomerkörper an dem Spalt nicht aufreibt und beschädigt wird, besitzen die Haltestege vorzugsweise abgewinkelte Flansche, so dass der Spalt keilförmig konfiguriert ist. Die Keilform ermöglicht einerseits eine zuverlässige Zentrierung und sorgt über Radien in dem Übergangsbereich zu den abgewinkelten Flanschen für materialschonende, nicht einschneidende Kontaktflächen zum Elastomerkörper.

Die Haltestege selbst sind in bevorzugter Ausgestaltung im Wesentlichen U-förmig konfiguriert und sind mit ihren von der Blattfeder wegweisenden und zu einer Achse hinweisenden Schenkeln mit der Achse stoffschlüssige verbunden. Die Schenkel können daher unterschiedlich lang sein. Auch müssen die Schenkel nicht parallel zueinander verlaufen. Maßgeblich ist, dass der untere Haltesteg über seine beiden Schenkel unmittelbar an der Achse abgestützt ist, so dass sich eine direkte Krafteinleitung auf kurzem Wege ergibt. Zusätzliche Verschraubungen entfallen. Die gesamte Anordnung ist dadurch sehr leicht und zudem kompakt.

In vorteilhafter Weiterbildung ist die obere Blattfederhalterung H-förmig konfiguriert. Sie besitzt zwei Parallelschenkel, die über einen Verbindungsschenkel wie bei dem Buchstaben H miteinander verbunden sind. Die Parallelschenkel überspannen die Blattfeder in ihrer Breite und im Abstand zueinander, während sich der Verbindungsschenkel in Längsrichtung der Blattfeder erstreckt. Durch eine H-förmige Ausgestaltung ergibt sich ein definierter Abstand der Parallelschenkel zueinander. Gleichzeitig wird berücksichtigt, dass die im Bereich der Paralielschenkei ansetzende Verschraubung mit der unteren Blattfederhalterung im Wesentlichen nur dazu führt, dass die Spannkraft über die Parallelschenkel auf den Elastomerkörper und damit die Blattfeder ausgeübt wird. Der Zwischenraum zwischen den Parallelschenkeln bzw. der dort angeordneten Verbindungsschenkel wird mittelbar über die Parallelschenkel gegen den Elastomerkörper und damit gegen die Blattfeder gedrängt. Die Parallelschenkel sollten daher möglichst massiv ausgestaltet sein, um die notwendigen Flächenpressungen aufzubringen, wohingegen der Verbindungsschenkel leichtbauender gestaltet sein kann. Bevorzugt ist der Verbindungsschenkel daher im Querschnitt U-förmig konfiguriert und zur Blattfeder hin offen.

Da sich bei endseitiger Anbindung der Parallelschenkel kein gleichförmiger Kraftverlauf über die Länge der Parallelschenkel ergibt, ist vorgesehen, die Dicke der Paralleischenkel von der Mitte der Blattfedern zu ihren Enden hin zu reduzieren. Bevorzugt ergibt sich ein bogenförmiger, spannungs- und damit auch gewichtsoptimierter Verlauf der Parallelschenkel.

In einer weiteren Ausführungsform ist die Einlage mit einem über den Elastomerkörper vorstehenden Zentrierbolzen verbunden. Der Zentrierbolzen dient als Montagehilfe für die korrekte Positionierung der Blattfeder an der Blattfederhalterung, Der Zentrierbolzen wird auch als Herzbolzen bezeichnet. Der Zentrierbolzen kann z.B. stoffschlüssig mit einer metallischen Einlage in dem unteren Elastomerkörper verbunden sein. Die Einlage mit dem in Richtung der Blattfeder über den Elastomerkörper vorstehenden Zentrierbolzen ist einvulkanisiert. Das von der Blattfeder wegweisende Ende des Zentrierbolzens kann in eine Zentrieröffnung der unteren Blattfederhalterung greifen. Hierzu können die benachbarten Haltestege im Bereich des Spaltes überbrückt werden, wobei in der Überbrückung eine entsprechende Zentrieröffnung zur Verfügung steht. Grundsätzlich ist es auch denkbar, den als Spalt bezeichneten Bereich lediglich als Vertiefung zwischen den Haltestegen auszubilden, wobei die Haltestege in diesem Fall eine miteinander verbundene Einheit bilden.

Die bevorzugte Ausführungsform der Erfindung sieht eine obere Blattfederhalterung mit Beinen und eine untere Blattfederhalterung ohne Beine vor. Es ist im Rahmen der Erfindung aber auch möglich, die Beine an der unteren Blattfederhalterung vorzusehen, bzw. obere und untere Blattfederhalterung zu vertauschen. Die vorstehenden Ausführungen zu der oberen Blattfederhalterung gelten dann sinngemäß für die untere Blattfederhalterung, welche als Gussbauteil, Schmiedebauteil oder als Schweißkonstruktion ausgeführt sein kann.

Die Erfindung wird nachfolgend anhand eines in den Figuren 1 bis 3 dargestellten Ausführungsbeispiels näher erläutert. Es zeigt:
- Figur 1: eine Explosionsdarstellung einer erfindungsgemäßen Blattfederanbindung;
- Figur 2: die Blattfederanbindung der Figur 1 im Längsschnitt und
- Figur 3: die Blattfederanbindung der Figur 2 im Querschnitt,

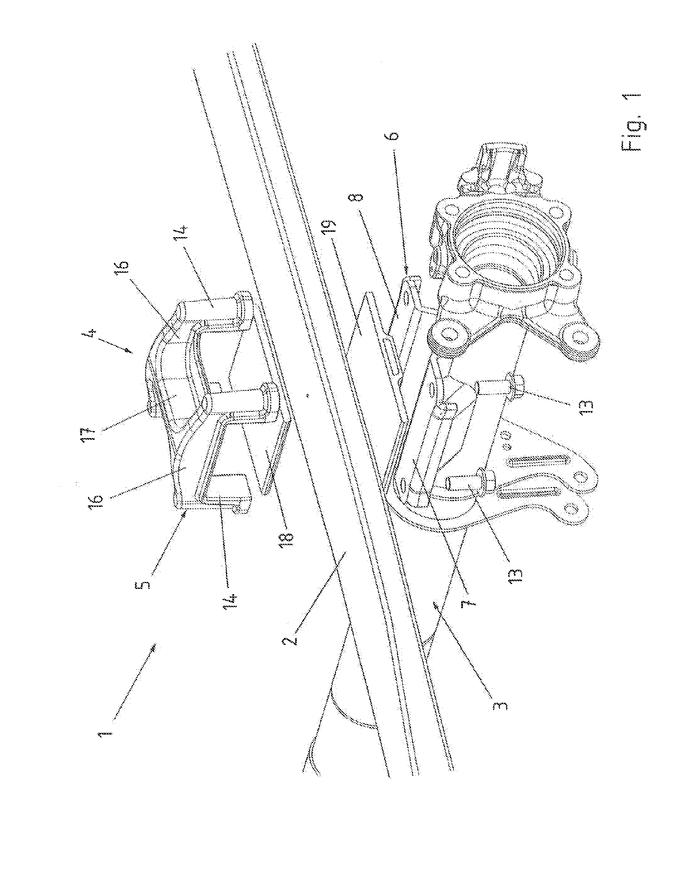

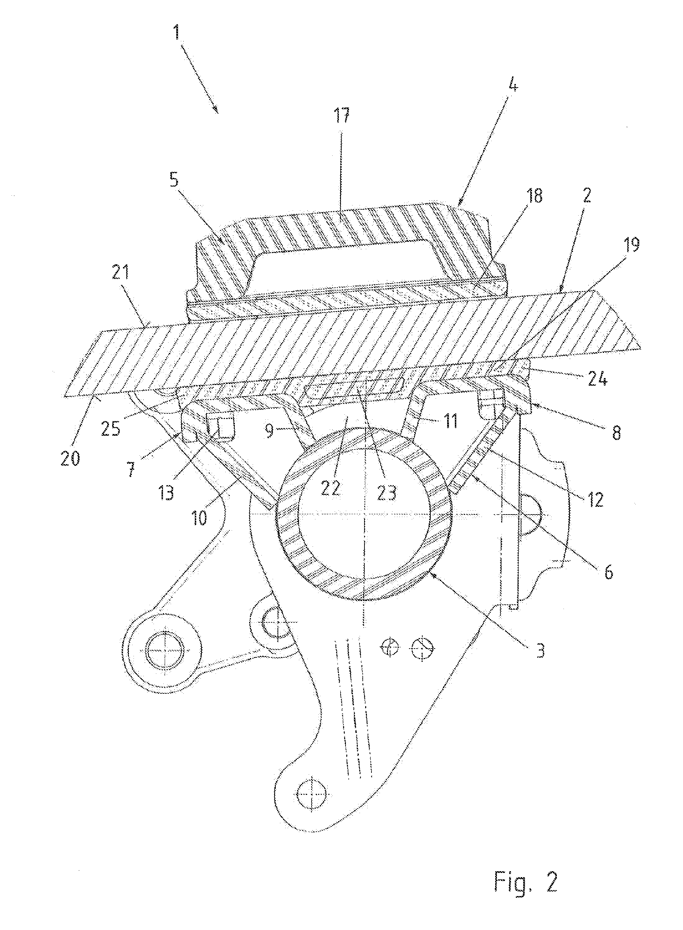

Figur 1 zeigt eine Blattfederanbindung 1 zur Fixierung einer Blattfeder 2 an einer Achse 3 eines nicht näher dargestellten Fahrwerks eines Kraftfahrzeuges. Die Blattfeder 2 besteht aus einem glasfaserverstärkten Kunststoff. Diese besitzt einen rechteckigen Querschnitt. Die Blattfederanbindung 1 umfasst ferner eine Blattfederhalterung 4, die sich aus einer oberen Blattfederhalterungen 5 und einer unteren Blattfederhalterung 6 zusammensetzt. Die obere Blattfederhalterung 5 ist der unteren Blattfederhalterung 6 lösbar zugeordnet. Die untere Blattfederhalterung 6 ist mit der Achse 3 verschweißt. Die untere Blattfederhalterung 6 umfasst zwei Haltestege 7, 8, die im Abstand zueinander angeordnet sind und jeweils über abgewinkelte Flansche 9, 10, 11, 12, die sich gerade in Richtung der rohrförmigen Achse 3 erstrecken, mit der Achse 3 verschweißt sind (Figur 2).

Aus Figur 1 ist zu erkennen, dass in den Haltestegen 7, 8 jeweils im Endbereich zwei Bohrungen angeordnet sind, durch welche Schraubbolzen 13 gesteckt werden, um die obere Blattfederhalterung 5 mit der unteren Blattfederhalterung 6 zu verschrauben.

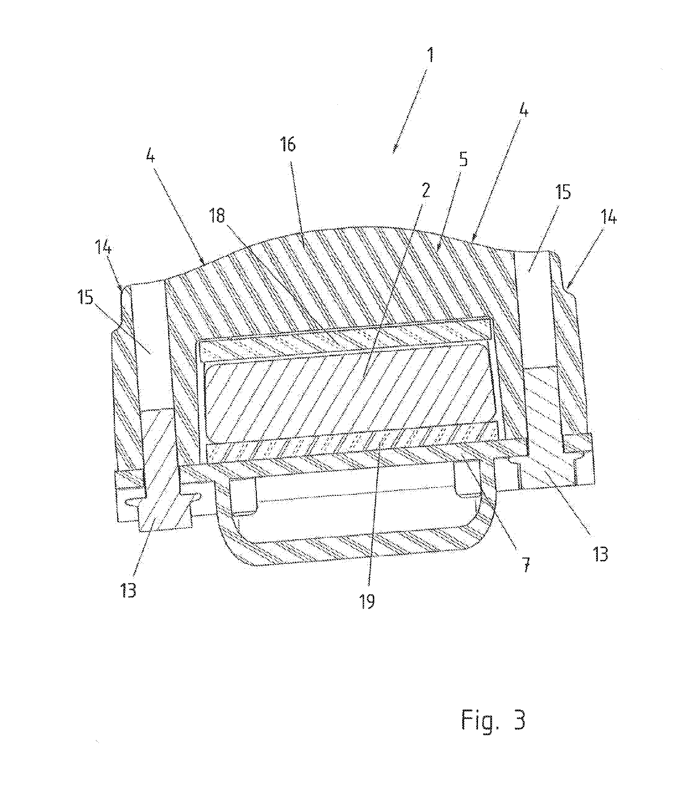

Die Verschraubung erfolgt seitlich an den der Blattfeder 2 vorbeigeführten Beinen 14. Die obere Blattfederhalterung 5 besitzt vier identisch konfigurierte jeweils im Eckbereich angeordnete Beine 14 mit einer Gewindebohrung 15 (Figur 3). Die Gewindebohrung 15 ist als Durchgangsbohrung gestaltet. Jeweils zwei mit einem Haltesteg 7 verschraubte Beine 14 sind über einen sogenannten Parallelschenkel 16 miteinander verbunden. Die beiden Parallelschenkel 16 verlaufen quer zur Blattfeder 2, wohingegen ein zentraler Verbindungsschenkel 17 in Längsrichtung der Blattfeder 2 verläuft. Dadurch ist die obere Blattfederhalterung 5 im Wesentlichen H-förmig konfiguriert.

Aus den Figuren 1 und 3 ist zu erkennen, dass die Oberseite der oberen Blattfederhalterung 5 gewissermaßen bogenförmig gekrümmt. Die Dicke der Parallelschenkel 16 ist in der Mitte bzw. der Mittellängsebene der Blattfeder 2 daher am größten und nimmt zu den Enden in Richtung der Beine 14 bogenförmig ab. Die Dickenabnahme erfolgt kontinuierlich bzw. fließend. Es gibt keine sprunghaften Übergänge.

Der Verbindungsschenkel 17 befindet sich dort, wo die Dicke der Parallelschenkel 16 am größten ist, das heißt also genau im mittleren Bereich. Der Verbindungsschenkel 17 besitzt die gleiche Dicke bzw. Höhe wie die Parallelschenkel 16. In Figur 2 ist jedoch zu erkennen, dass der Verbindungssehenkel 17 im Querschnitt U-förmig konfiguriert und zur Blattfeder 2 hin offen gestaltet ist. Dies erfolgt aus Gründen der Gewichtsreduzierung, da die Hauptspannkräfte über die Parallelschenkel 16 übertragen werden.

In der Einbaulage befindet sich zwischen der oberen Blattfederhalterung 5 und der Blattfeder 2 ein flacher, quaderförmiger Elastomerkörper 18. Anhand der Figur 2 ist zu erkennen, dass sich der Elastomerkörper 18 über die in Längsrichtung der Blattfeder 2 gemessene Länge der oberen Blattfederhalterung 5 erstreckt.

Ein weiterer Elastomerkörper 19 befindet sich auf der gegenüberliegenden Unterseite der Blattfeder 2. Auch dieser Elastomerkörper 19 liegt ebenso flächig auf der Unterseite 20 auf wie der Elastomerkörper 18 auf der Oberseite 21 der Blattfeder 2. Im Unterschied zum oberen Elastomerkörper 18 ist der untere Elastomerkörper 19 jedoch in nicht näher dargestellter Weise mit der Unterseite 20 mit der Blattfeder 2 stoffschlüssig verbunden, insbesondere verklebt.

Zusätzlich befindet sich der untere Elastomerkörper 19 im formschlüssigen Eingriff mit der unteren Blattfederhalterung 6. Da die Haltestege 7, 8 der unteren Blattfederhalterung 6 im Abstand zueinander verlaufen, ergibt sich zwischen den Haltestegen 7, 8 ein Spalt 22, der durch die schräggestellten Flansche 9, 11 begrenzt wird. In diesem gewissermaßen keilförmigen und daher zentrierenden Spalt 22 greift ein Teilbereich des unteren Elastomerkörpers 19 ein. Zusätzlich befindet sich in dem unteren Elastomerkörper 19 eine metallische Einlage 23, die etwas schmaler als der Mündungsbereich des Spaltes 22 ist. Die Einlage 23 ist insbesondere einvulkanisiert und vollständig von dem Elastomermaterial, bei dem es sich insbesondere um Gummi handelt, umgeben. Die flächige Einlage 23 ist endseitig abgeschrägt und in ihrem Winkel etwa dem Verlauf der Flansche 9, 11 angepasst sind. Die Einlage muss nicht zwingend aus Metall bestehen. Sie kann auch einem widerstandsfähigen Kunststoff, wie z.B. Polyamid bestehen.

Ein weiterer formschlüssiger Eingriff ergibt sich im Endbereich des Elastomerkörpers 19. Auch hier ist der Elastomerkörper 19 verdickt ausgeführt, so dass seine Enden 24, 25 die Haltestege 7, 8 an den äußeren Längskanten ein kleines Stück umschließen.

Die Haltestege 7, 8 sind im Übergangsbereich zu ihren Flanschen 9, 10, 11, 12 jeweils mit hinreichend großen Radien versehen, um scharfe Kanten im Kontaktbereich zu dem Elastomerkörper 19 zu vermeiden.

Während die untere Blattfederhalterung 6 als Schweißkonstruktion ausgestaltet ist, handelt es sich bei der hier dargestellten oberen Blattfederhalterung 5 um ein spanabhebend bearbeitetes Gussbauteil. Die obere Blattfederhalterung kann aber auch als Schmiedeteil oder als Blechschweißkonstruktion ausgeführt sein.

Ebenso oder alternativ zu dem unteren Elastomerkörper 19 kann der obere Elastomerkörper 18 mit der Oberseite 21 der Blattfeder 2 stoffschlüssig verbunden, insbesondere mit dieser verklebt sein.

### Bezugszeichen:

- 1: - Blattfederanordnung
- 2: - Blattfeder
- 3: - Achse
- 4: - Blattfederhalterung
- 5: - obere Blattfederhalterung
- 6: - untere Blattfederhalterung
- 7: - Haltesteg
- 8: - Haltesteg
- 9: - Flansch
- 10: - Flansch
- 11: - Flansch
- 12: - Flansch
- 13: - Schraubbolzen
- 14: - Bein
- 15: - Gewindebolzen
- 16: - Parallelschenkel
- 17: - Verbindungsschenkel
- 18: - Elastomerkörper
- 19: - Elastomerkörper
- 20: - Unterseite
- 21: - Oberseite
- 22: - Spalt
- 23: - Einlage
- 24: - Ende
- 25: - Ende

## Patentansprüche

1. Blattfederanbindung zur Verbindung einer Blattfeder (2), insbesondere aus einem Faserverbundwerkstoff, mit einer Achse (3) oder einem Rahmen eines Fahrzeuges, mit einer geteilten Blattfederhalterung (4), in welcher die Blattfeder (2) unter Eingliederung von Elastomerkörpern (18, 19) definiert vorgespannt gehalten ist, wobei wenigstens ein Elastomerkörper(18, 19) stoffschlüssig mit der Blattfeder (2) verbunden ist, **dadurch gekennzeichnet, dass** eine U-förmig konfigurierte obere Blattfederhalterung (6) die Blattfeder (2) auf einer Oberseite (21) und den sich gegenüberliegenden Längsseiten umgreift, wobei Beine (14) der oberen Blattfederhalterung (5) mit einer gegenüberliegenden unteren Blattfederhalterung (6) über Schraubbolzen (13) verbunden sind, wobei die untere Blattfederhalterung (6) mehrere im Abstand zueinander verlaufende Haltestege (7, 8) aufweist, die stoffschlüssig mit der Achse (3) verbunden sind.

2. Blattfederanbindung nach Anspruch 1, **dadurch gekennzeichnet, dass** wenigstens ein Elastomerkörper (18, 19) über einen kalt- oder warmaushärtenden Klebstoff mit der Blattfeder (2) verbunden ist.

3. Blattfederanbindung nach Anspruch 1 oder 2, **dadurch gekennzeichnet, dass** der wenigstens eine Elastomerkörper (18, 19) über das Harz einer Blattfeder (2) aus einem Faserverbundwerkstoff mit der Blattfeder (2) verbunden ist.

4. Blattfederanbindung nach einem der Ansprüche 1 bis 3, **dadurch gekennzeichnet, dass** wenigstens eine Einlage (23) in den Elastomerkörper (19) integriert ist.

5. Blattfederanbindung nach einem der Ansprüche 1 bis 4, **dadurch gekennzeichnet, dass** der wenigstens eine Elastomerkörper (19) auf seiner der Blattfeder (2) abgewandten Seite eine Oberflächenstruktur aufweist, die im formschlüssigen Eingriff mit der Blattfederhalterung (4) steht.

6. Blattfederanbindung nach einem der Ansprüche 4 oder 5, **dadurch gekennzeichnet, dass** die wenigstens eine Einlage (23) in einem Bereich angeordnet ist, welcher in formschlüssigen Eingriff mit der Blattfederhalterung (4) steht.

7. Blattfederanbindung nach einem der Ansprüche 1 bis 6, **dadurch gekennzeichnet, dass** die Haltestege (7, 8) einen Spalt (22) begrenzen, der für den formschlüssigen Eingriff des Elastomerkörpers (19) ausgebildet ist.

8. Blattfederanbindung nach einem der Ansprüche 1 bis 7, **dadurch gekennzeichnet, dass** die Haltestege (7, 8) abgewinkelte Flansche (9, 11) aufweisen, so dass der Spalt (22) keilförmig konfiguriert ist.

9. Blattfederanbindung nach einem der Ansprüche 1 bis 8, **dadurch gekennzeichnet, dass** die Haltestege (7, 8) im Wesentlichen U-förmig konfiguriert sind und mit ihren von den Blattfeder (2) wegweisenden und zu einer Achse (3) hinweisenden Flanschen (9, 10, 11, 12) mit der Achse (3) stoffschlüssig verbunden sind.

10. Blattfederanbindung nach einem der Ansprüche 1 bis 9, **dadurch gekennzeichnet, dass** die obere Blattfederhalterung (5) H-förmig konfiguriert ist, mit zwei Parallelschenkeln (16), welche die Blattfeder (2) in ihrer Breite überspannen und einem die Parallelschenkel (16) verbindenden Verbindungsschenkel (17), der sich in Längsrichtung der Blattfeder (2) erstreckt.

11. Blattfederanbindung nach Anspruch 10, **dadurch gekennzeichnet, dass** die Dicke der Parallelschenkel (16) von der Mitte der Blattfeder (2) zu ihre Seiten hin abnimmt.

12. Blattfederanbindung nach Anspruch 10 oder 11, **dadurch gekennzeichnet, dass** der Verbindungsschenkel (17) im Querschnitt U-förmig konfiguriert und zu Blattfeder (2) hin offen ist.

13. Blattfederanbindung nach einem der Ansprüche 4 bis 12, **dadurch gekennzeichnet, dass** die Einlage (23) mit einem über den Elastomerkörper (19) vorstehenden Zentrierbolzen verbunden ist.
